# EUROPEAN PATENT APPLICATION

(11) **EP 4 350 559 A1**
(43) Date of publication of application: **10.04.2024**
(21) Application number: 23178634.4
(22) Date of filing: 12.06.2023
(51) Int. Cl.: G06F 21/64

(54) **INFORMATION MANAGEMENT PROGRAM, INFORMATION PROCESSING SYSTEM, AND INFORMATION MANAGEMENT METHOD**

(30) Priority: 13.09.2022 JP 2022145117
(71) Applicant: FUJITSU LIMITED, Kawasaki-shi, Kanagawa 211-8588 (JP); Keio University, Tokyo, 108-8345 (JP)
(72) Inventor: SAKAMOTO, Takuya, Kawasaki-shi, Kanagawa, 211-8588 (JP); NIMURA, Kazuaki, Kawasaki-shi, Kanagawa, 211-8588 (JP); MATSUKURA, Ryuichi, Kawasaki-shi, Kanagawa, 211-8588 (JP); NAKAMICHI, Koji, Kawasaki-shi, Kanagawa, 211-8588 (JP); FUKUI, Masayuki, Kawasaki-shi, Kanagawa, 211-8588 (JP); SUZUKI, Shigeya, Fujisawa-shi, Kanagawa, 252-0882 (JP); NAKAMURA, Osamu, Fujisawa-shi, Kanagawa, 252-0882 (JP); ABE, Ryosuke, Fujisawa-shi, Kanagawa, 252-0882 (JP)
(74) Representative: Hoffmann Eitle

(57) **Abstract**

A non-transitory computer-readable storage medium storing therein an information management program for causing a computer to execute a process comprises: receiving property information indicating a reliability of a post uploaded on the Internet and a digital signature generated from the property information; and storing the property information, to which identification information of the post and the digital signature are added, in a storage.

## Description

### FIELD

The present invention relates to an information management program, an information processing system, and an information management method.

### BACKGROUND

In recent years, as smartphones and SNSs (Social Networking Services) have become widespread, information is able to be sent and viewed on the Internet, regardless of time and place. However, there are cases where the information to be sent includes false information or inaccurate information that is intentionally distributed (hereinafter, also referred to as "disinformation"), and the disinformation is spread depending on the situation, for instance.

Therefore, from the viewpoint of suppressing such disinformation from being spread, there are cases where various methods are used to confirm the reliability of posts on the Internet, for instance.

Specifically, when a viewer of a post (hereinafter, also simply referred to as a "viewer") views a post as described above, the viewer determines whether or not the poster is a reliable person by utilizing a method other than the Internet, e.g., a prior contract or a separate information processing system or the like, for instance. Then, if the viewer has determined that the poster is a reliable person, the viewer determines that the content of the post of the poster is reliable, for instance (e.g., refer to U.S. Patent Application Publication No. 2013/0239170, Japanese Patent Application Publication No. 2005-099969, Japanese Translation of PCT Application No. 2009-500757, U.S. Patent Application Publication No. 2006/0015722, Japanese Patent Application Publication No. 2002-259178).

### SUMMARY

In one aspect, the present invention aims at providing an information management program, an information processing system, and an information management method, with which the reliability of posts uploaded on the Internet is able to be confirmed.

A non-transitory computer-readable storage medium storing therein an information management program for causing a computer to execute a process comprises: receiving property information indicating a reliability of a post uploaded on the Internet and a digital signature generated from the property information; and storing the property information, to which identification information of the post and the digital signature are added, in a storage.

### BRIEF DESCRIPTION OF DRAWINGS

FIG. 1 is a diagram for describing the configuration of the information processing system 10.
FIG. 2 is a diagram for describing the hardware configuration of the information processing apparatus 1.
FIG. 3 is a diagram for describing the functions of the information processing apparatus 1 in the first embodiment.
FIG. 4 is a flowchart diagram for describing the outline of the information management processing in the first embodiment.
FIG. 5 is a flowchart diagram for describing the addition processing in the first embodiment.
FIG. 6 is a diagram for describing the addition processing in the first embodiment.
FIG. 7 is a diagram for describing a specific example of the property information 131.
FIG. 8 is a diagram illustrating a specific example of the posting identification information 132.
FIG. 9 is a diagram for describing a specific example of the graph information 133.
FIGS. 10 to 14 are diagrams for describing a specific example of the property information 131.
FIG. 15 is a flowchart diagram for describing the viewing processing in the first embodiment.
FIG. 16 is a diagram for describing the viewing processing in the first embodiment.
FIG. 17 is a flowchart diagram for describing the generation processing in the first embodiment.
FIG. 18 is a diagram for describing the generation processing in the first embodiment.

### DESCRIPTION OF EMBODIMENTS

When utilizing a method other than the Internet or a separate information processing system or the like, as described above, the viewer is not able to determine the reliability of each post on the Internet directly from the content of the post, for instance. Therefore, there are cases where the viewer is not able to sufficiently confirm the reliability of the posts, for instance. Hereinafter, a configuration of an information processing system 10 will be described.

### Configuration of Information Processing System in First Embodiment

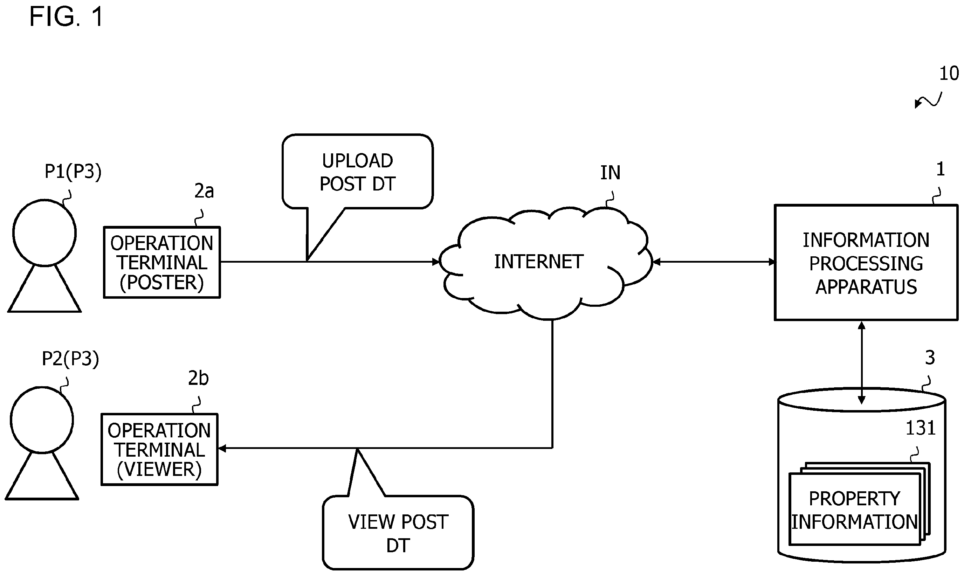

First, a configuration of an information processing system 10 will be described. FIG. 1 is a diagram for describing the configuration of the information processing system 10.

The information processing system 10 illustrated in FIG. 1 includes an information processing apparatus 1, an operation terminal 2a, an operation terminal 2b, and a storage apparatus 3, for instance. Hereinafter, the operation terminal 2a and the operation terminal 2 may also be collectively referred to as operation terminals 2.

The operation terminal 2a is a terminal owned by a poster P1, for instance, and is a terminal with which the poster P1 performs uploading, or the like, of a post DT to a content server (not illustrated) on the Internet IN. Specifically, the operation terminal 2a may be a smartphone or the like owned by the poster P1. Also, the operation terminal 2a is able to access the information processing apparatus 1 via the Internet IN, for instance.

The operation terminal 2b is a terminal owned by a viewer P2, for instance, and is a terminal with which the viewer P2 performs viewing, or the like, of the post DT that the poster P1 uploaded to the content server on the Internet IN. Specifically, the operation terminal 2b may be a smartphone or the like owned by the viewer P2. Also, the operation terminal 2b is able to access the information processing apparatus 1 via the Internet IN, for instance.

Note that the poster P1 may view a post uploaded by another poster (not illustrated), via the operation terminal 2a, for instance. Also, the viewer P2 may upload a post on the Internet IN via the operation terminal 2b, for instance. Moreover, a case where the information processing system 10 includes two operation terminals 2 (operation terminal 2a and operation terminal 2b) will be described below, but the information processing system 10 may also include three or more operation terminals 2.

The storage apparatus 3 is an HDD (Hard Disk Drive) or an SSD (Solid State Drive), for instance, and stores property information 131 that is added by the poster P1, the viewer P2, or the like (hereinafter, also referred to as a "generation agent P3") to the post DT on the Internet IN that is uploaded by the poster P1. The generation agent P3 is a person or a thing that generates the property information 131, for instance, and includes a person other than the poster P1 and viewer P2, and a device that automatically generates the property information 131. Also, the property information 131 is information used as determination criteria when determining the reliability of content of the post DT, for instance. Specifically, the property information 131 is information indicating the attributes of the poster P1 of the post DT, e.g., qualifications held and a belonging organization, or information indicating the attributes of image data or the like included in the post DT (e.g., photographing place and photographing date and time), for instance.

The information processing apparatus 1 is at least one physical machine or at least one virtual machine, for instance, and performs processing for managing the property information 131 regarding the post DT (hereinafter, also referred to as information management processing).

Specifically, the information processing apparatus 1 in the present embodiment receives property information 131 indicating the reliability of the post DT uploaded on the Internet IN, and a digital signature generated from the property information 131, for instance. Also, the information processing apparatus 1 stores the property information 131 to which the digital signature and identification information of the post DT uploaded on the Internet IN are added in the storage apparatus 3.

That is, the information processing apparatus 1 in the present embodiment secures the authenticity and integrity (unaltered state) of each property information 131 by storing the property information 131 to which the digital signature generated by a generation agent P3 of the property information 131 is added, for instance.

Accordingly, when viewing a post DT uploaded on the Internet IN, the viewer P2 is able to determine the reliability of the post DT, as appropriate, by referring to the property information 131 regarding the post DT, for instance.

Also, when another property information 131 associated with a person or thing related to the post DT uploaded on the Internet IN (hereinafter, also simply referred to as another property information 131) is already stored in the storage apparatus 3, for instance, the information processing apparatus 1 in the present embodiment stores, in an associated manner, the property information 131 and the other property information 131 that are associated with the post DT

That is, when storing each piece of property information 131 in the storage apparatus 3, the information processing apparatus 1 in the present embodiment forms a graph structure by associating the property information 131 with another property information 131 regarding the generation agent P3 of the property information 131 or another property information 131 regarding an object of the post DT, for instance.

Accordingly, even when the viewer P2 is not able to determine the reliability of a post DT from the content of the property information 131 regarding the post DT, the viewer P2 is able to sequentially trace back and confirm another property information 131 related to the post DT, and is able to determine the reliability of the post DT, for instance.

Specifically, when viewing a post DT including a sentence saying that "∘∘ River close to the house has flooded!", for instance, the viewer P2 also confirm the property information 131 (e.g., property information 131 regarding image data included in the post DT) regarding the post DT Then, if the viewer P2 determines that the place and the date and time mentioned in the post DT are close to the place and the date and time included in the property information 131 (photographing place and photographing date and time of image data included in the post DT), the viewer P2 is able to determine that the content of the post DT is not disinformation, for instance.

In contrast, when property information 131 including content that the flood warning level of ∘∘ River is low is associated with the post DT, the viewer P2 is able to determine that the content of the post DT is able to be disinformation by referring to the property information 131, for instance. Moreover, as a result of tracing back and referring to property information 131 (another property information 131) regarding the generation agent P3 of the property information 131 indicating the flood warning level of ∘∘ River, if the generation agent P3 of the property information 131 indicating the flood warning level of ∘∘ River is an agent of the administrative agency (agency that controls oo River), the viewer P2 is able to determine that the content of the post DT is able to highly possibly be disinformation, for instance.

### Hardware Configuration of Information Processing Apparatus

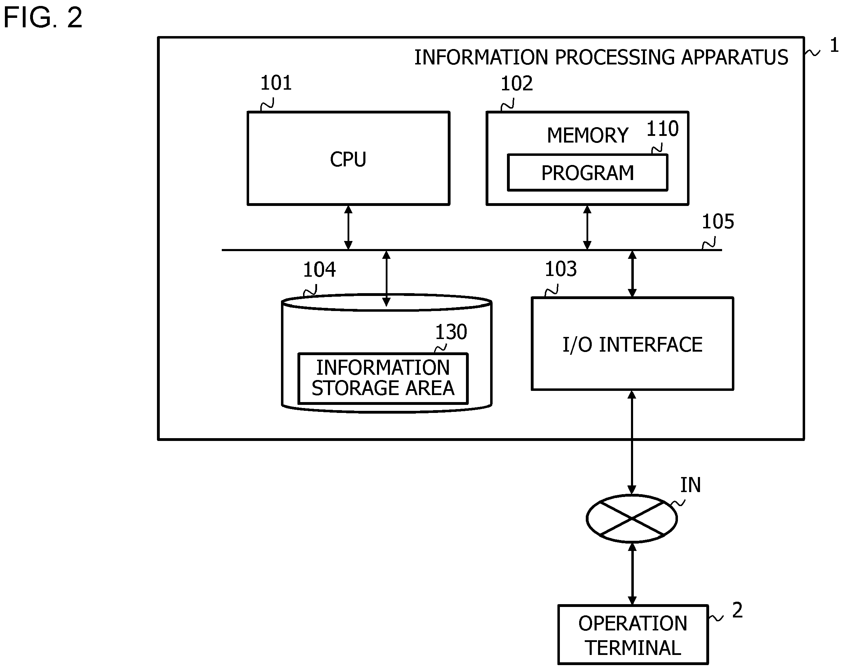

Next, a hardware configuration of the information processing apparatus 1 will be described. FIG. 2 is a diagram for describing the hardware configuration of the information processing apparatus 1.

As illustrated in FIG. 2, the information processing apparatus 1 includes a CPU (Central Processing Unit) 101, which is a processor, a memory 102, a communication device (I/O interface) 103, and a storage 104, for instance. The units are connected to each other via a bus 105.

The storage 104 has a program storage area (not illustrated) for storing a program 110 for performing information management processing, for instance. Also, the storage 104 has an information storage area 130 for storing information to be used when performing the information management processing, for instance. Note that the storage 104 may be an HDD or an SSD, for instance.

The CPU 101 performs the information management processing by executing the program 110 loaded to the memory 102 from the storage 104, for instance.

Also, the communication device 103 communicates with the operation terminals 2 via the Internet IN, for instance.

### Functions of Information Processing Apparatus in First Embodiment

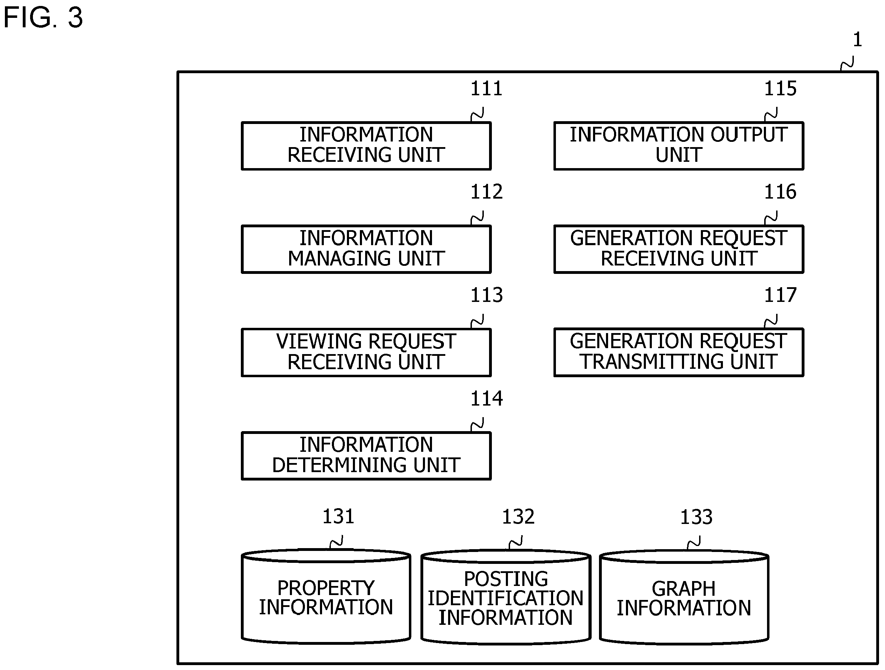

Next, functions of the information processing apparatus 1 in the first embodiment will be described. FIG. 3 is a diagram for describing the functions of the information processing apparatus 1 in the first embodiment.

As illustrated in FIG. 3, the information processing apparatus 1 realizes various functions including an information receiving unit 111, an information managing unit 112, a viewing request receiving unit 113, an information determining unit 114, an information output unit 115, a generation request receiving unit 116, and a generation request transmitting unit 117, by the hardware, e.g., the CPU 101 and the memory 102 organically cooperating with the program 110, for instance.

Also, as illustrated in FIG. 3, the information processing apparatus 1 stores the property information 131 and posting identification information 132 (hereinafter, also simply referred to as "identification information 132"), and graph information 133 in the information storage area 130, for instance. Note that the graph information 133 will be described later.

First, functions in the processing for storing (adding) the property information 131 in the storage apparatus 3 (hereinafter, also referred to as "addition processing"), out of the information management processing, will be described.

The information receiving unit 111 receives property information 131 (hereinafter, also referred to as "specific property information 131") regarding a post DT uploaded on the Internet IN (hereinafter, also referred to as a "specific post DT") and a digital signature (hereinafter, also referred to as "specific digital signature") generated with respect to the specific property information 131, from an operation terminal 2, for instance. Specifically, the information receiving unit 111 receives information in which specific property information 131 transmitted by a poster P1 (generation agent P3) via an operation terminal 2 is associated with a specific digital signature, for instance.

The information managing unit 112 stores the specific property information 131 received by the information receiving unit 111 and the specific digital signature received by the information receiving unit 111 in the storage apparatus 3 in association with the posting identification information 132 regarding the specific post DT, for instance. The posting identification information 132 is information for identifying each post DT, for instance, and is information stored in the storage apparatus 3 in advance by a content server to which the post DT is uploaded, or information stored in the storage apparatus 3 by a generation agent P3 of the property information 131 regarding the post DT.

Next, functions in the processing for viewing property information 131 stored in the storage apparatus 3 (hereinafter, also referred to as "viewing processing"), out of the information management processing, will be described.

The viewing request receiving unit 113 receives information for requesting viewing of specific property information 131 stored in the storage apparatus 3 (hereinafter, also referred to as "viewing request information"), for instance. The viewing request information is information including posting identification information 132 associated with the specific property information 131, for instance. Specifically, the viewing request receiving unit 113 receives viewing request information transmitted by a viewer P2 of the specific post DT via an operation terminal 2, for instance.

The information determining unit 114 determines whether or not the specific property information 131 corresponding to the viewing request information received by the viewing request receiving unit 113 is stored, by referring to the storage apparatus 3, for instance. That is, the information determining unit 114 searches the specific property information 131 from the property information 131 stored in the storage apparatus 3, for instance.

If the information determining unit 114 has determined that the specific property information 131 is stored in the storage apparatus 3, the information output unit 115 acquires the specific property information 131 from the storage apparatus 3, and transmits the specific property information 131 to the operation terminal 2 (operation terminal 2 that has transmitted the viewing request information).

Note that a configuration may be adopted in which, upon acquiring a specific post DT on the Internet IN according to the request of the viewer P2, for instance, the operation terminal 2 automatically transmits viewing request information regarding the specific property information 131 to the information processing apparatus 1. Also, upon receiving the specific property information 131 transmitted from the information processing apparatus 1, the operation terminal 2 may display the specific post DT together with the specific property information 131 on the output screen of the operation terminal 2, for instance.

Next, functions in the processing for generating property information 131 (hereinafter, also referred to as "generation processing"), out of the information management processing, will be described.

The generation request receiving unit 116 receives information for requesting generation (addition) of specific property information 131 (hereinafter, also referred to as "generation request information"), for instance. The generation request information is information including posting identification information 132 corresponding to the specific property information 131, for instance. Also, the generation request information is information including the type of property information 131 regarding which generation is requested, for instance. Specifically, the generation request receiving unit 116 receives generation request information that the viewer P2 of the specific post DT has transmitted via the operation terminal 2, for instance.

The generation request transmitting unit 117 transmits the generation request information received from the operation terminal 2 to a person or thing related to the specific post DT, for instance. Specifically, the generation request transmitting unit 117 transmits the generation request information that the generation request receiving unit 116 has received from the operation terminal 2, to a generation agent P3 that is stored in advance as a generation agent P3 corresponding to the type of property information 131 included in the generation request information, by referring to the storage apparatus 3, for instance.

### Outline of Information Management Processing in First Embodiment

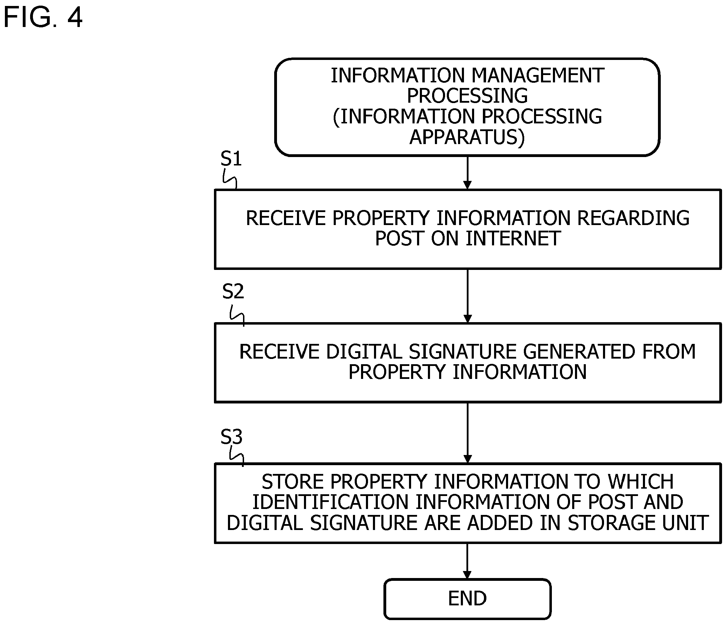

Next, an outline of the first embodiment will be described. FIG. 4 is a flowchart diagram for describing the outline of the information management processing in the first embodiment.

As illustrated in FIG. 4, the information processing apparatus 1 receives specific property information 131 indicating the reliability of a specific post DT uploaded on the Internet IN (S1), for instance. Also, the information processing apparatus 1 receives a specific digital signature generated from the specific property information 131 (S2), for instance.

Then, the information processing apparatus 1 stores, in the storage apparatus 3, specific property information 131 to which identification information and the specific digital signature of the specific post DT are added (S3).

As described above, the information processing apparatus 1 in the present embodiment manages each post DT upload on the Internet IN in association with property information 131 that is able to be used for confirming the reliability of content included in the post DT and a digital signature for assuring the authenticity and integrity of the property information 131 corresponding to the post DT, for instance.

Accordingly, when viewing each post DT, the viewer P2 is able to determine whether or not the post DT is reliable information by also referring to the property information 131 corresponding to the post DT, and is able to also determine whether or not the viewer P2 behaves according to the content of a specific post DT, for instance. Therefore, even under a situation in which it is highly possible that disinformation is spread on the Internet IN (e.g., when infectious disease outbreaks, in wartime, and when a disaster occurs), the information processing apparatus 1 in the present embodiment is able to suppress wrong behaviors based on disinformation from being performed.

### Details of Information Management Processing in First Embodiment

Next, the details of the information management processing of the first embodiment will be described. Specifically, addition processing, viewing processing, and generation processing that are included in the details of information management processing in the first embodiment will each be described.

### Addition Processing in First Embodiment

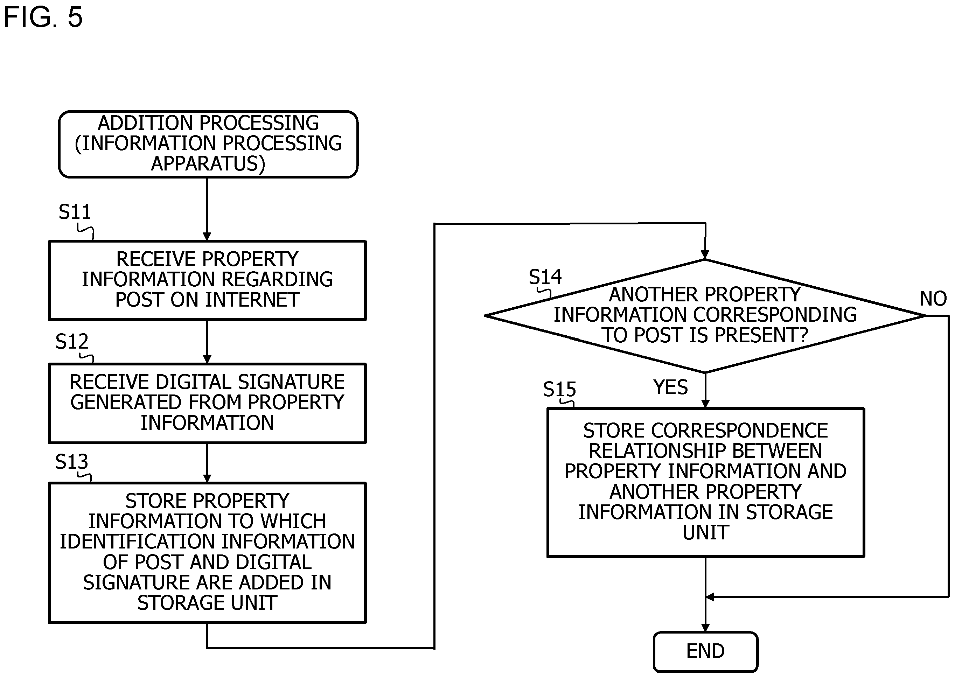

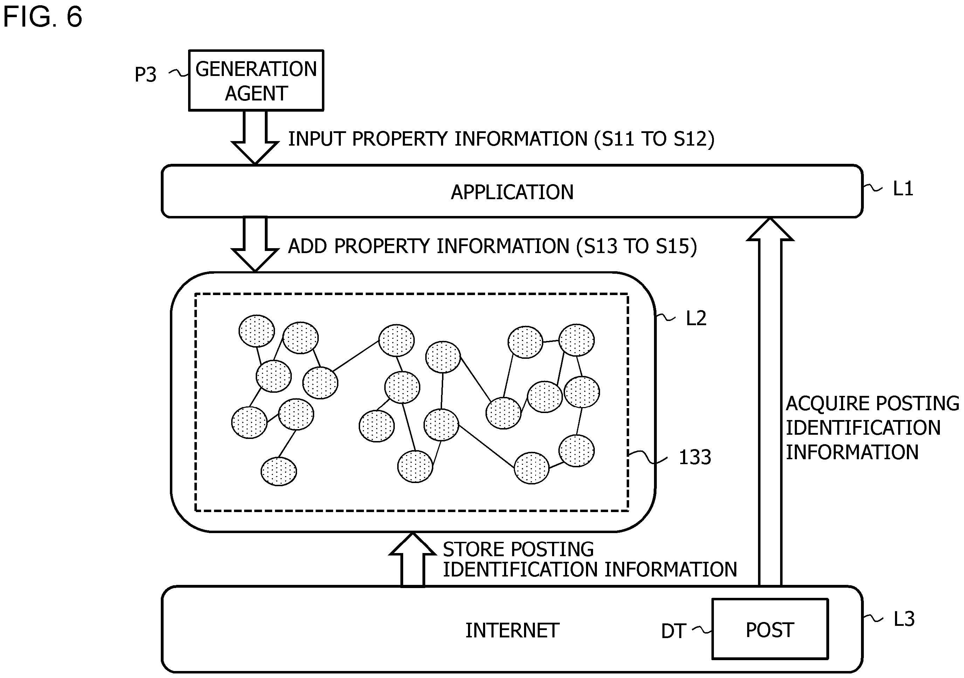

First, the addition processing in the first embodiment will be described. FIG. 5 is a flowchart diagram for describing the addition processing in the first embodiment. Also, FIG. 6 is a diagram for describing the addition processing in the first embodiment.

Note that description will be given below assuming that the layer in which an operation terminal 2 executes sets of processing is an application layer L1, as illustrated in FIG. 6 and the like. Also, description will be given below assuming that the layer in which the information processing apparatus 1 executes sets of processing and the storage apparatus 3 manages pieces of information, e.g., property information 131 is an endorsement layer L2. Moreover, description will be given below assuming that the layer in which posts DT are uploaded, downloaded, and the like, on the Internet IN (e.g., processing performed by a content server) is an Internet layer L3.

The information receiving unit 111 receives property information 131 transmitted from an operation terminal 2 (S11), for instance, as illustrated in FIG. 5. Also, the information receiving unit 111 receives a digital signature generated from the property information 131 in the operation terminal 2, from the operation terminal 2 (S12), for instance.

Also, the information managing unit 112 stores, in the storage apparatus 3, posting identification information 132 of a post DT corresponding to the property information 131 received in the processing in step S11 and the digital signature received in the processing in step S12 in association with the property information 131 received in the processing in step S11 (S13), for instance.

Specifically, when a poster P1 uploaded a post DT on the Internet IN, the content server stores posting identification information 132 regarding the uploaded post DT in the storage apparatus 3, as illustrated in FIG. 6, for instance. Also, when generating property information 131 regarding the post DT, a generation agent P3 refers to information included in the post DT using the operation terminal 2, and acquires the posting identification information 132 regarding the post DT via the operation terminal 2, for instance. Next, the generation agent P3, after generating the property information 131 regarding the post DT, generates a digital signature for certifying the authenticity and integrity of the generated property information 131. Moreover, the generation agent P3 transmits the property information 131 to which the digital signature and posting identification information 132 regarding the post DT are added to the information processing apparatus 1 from the operation terminal 2. Note that the posting identification information 132 regarding the post DT may also be stored in the storage apparatus 3 by the generation agent P3 that generates property information 131 regarding the post DT, for instance.

Thereafter, the information receiving unit 111 receives the property information 131 (property information 131 to which the digital signature and posting identification information 132 regarding the post DT are added) transmitted from the operation terminal 2 (S11 and S12), for instance. Then, the information managing unit 112 accumulates the property information 131 received by the information receiving unit 111 in the storage apparatus 3 (S13), for instance.

Returning to FIG. 5, the information managing unit 112 determines whether or not another property information 131 corresponding to the property information 131 received in the processing in step S11 is stored in the storage apparatus 3 (S14).

Specifically, the information managing unit 112 determines whether or not another property information 131 associated with the generation agent P3 of the property information 131 received in the processing in step S11 is stored in the storage apparatus 3, for instance.

If it is determined that, as a result, another property information 131 corresponding to the property information 131 received in the processing in step S11 is stored in the storage apparatus 3 (S14: YES), the information managing unit 112 stores, in the storage apparatus 3, the property information 131 received in the processing in step S11 in association with the other property information 131 that is determined to be stored in the storage apparatus 3 in the processing in step S14 (S15), for instance.

Specifically, the information managing unit 112 generates graph information 133 including a graph structure of information including the property information 131 by associating the property information 131 received in the processing in step S11 with another property information 131 related to the property information 131 received in the processing in step S11 (e.g., another property information 131 regarding a generation agent P3 of the property information 131 received in the processing in step S11), as illustrated in FIG. 6, for instance.

On the other hand, if it is determined that another property information 131 corresponding to the property information 131 received in the processing in step S11 is not stored in the storage apparatus 3 (S14: NO), the information managing unit 112 will not perform processing in step S15, for instance. A specific example of the property information 131 and the posting identification information 132 will be described below.

### Specific Example of Property Information

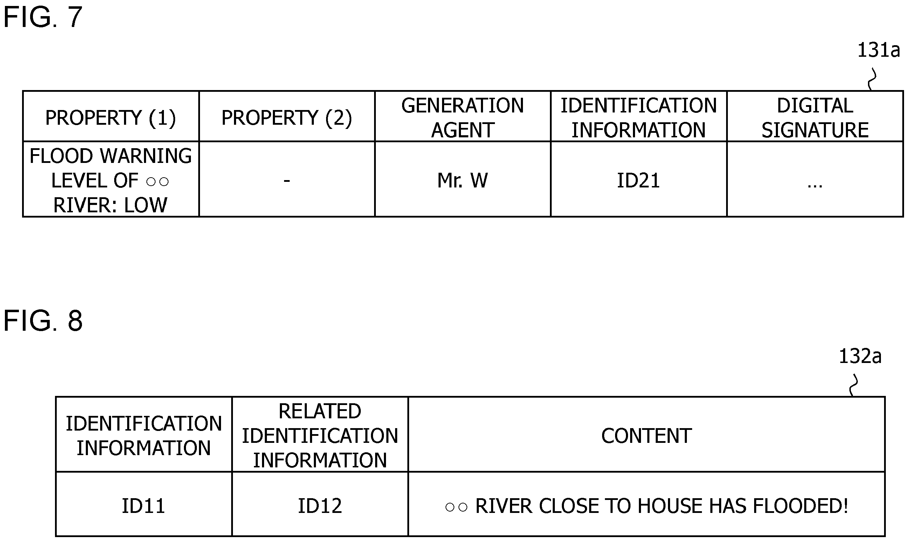

First, a specific example of the property information 131 will be described. FIGS. 7 and 10 to 14 are diagrams for describing a specific example of the property information 131. Specifically, FIG. 7 is a diagram for describing a specific example of the property information 131 (hereinafter, also referred to as "property information 131a") associated with a post DT (hereinafter, also referred to as a "post DTa") including a sentence saying that "∘∘ River close to the house has flooded!".

Property information 131 illustrated in FIG. 7 and the like includes "property (1)" and "property (2)" in which a plurality of properties included in the property information 131 are set, as items, for instance. Also, property information 131 illustrated in FIG. 7 and the like includes "generation agent" in which the name of a generation agent P3 of the property information 131 is set, "identification information" in which identification information of the generation agent P3 of the property information 131 is set, and "digital signature" in which a digital signature (encrypted data generated from the property information 131) for the property information 131 is set, as items, for instance. Note that, in the following description, "-" is set to an item in which information is not set. Also, a case where two properties are set in each property information 131 will be described below, but a configuration may also be adopted in which three or more properties are set in each property information 131.

Specifically, in the property information 131a illustrated in FIG. 7, "flood warning level of ∘∘ River: Low" is set as "property (1)", "-" is set as "property (2)", "Mr. W" is set as "generation agent", and "ID21" is set as "identification information", for instance.

### Specific Example of Posting Identification Information

Next, a specific example of the posting identification information 132 will be described. FIG. 8 is a diagram illustrating a specific example of the posting identification information 132. Specifically, FIG. 8 is a diagram illustrating a specific example of posting identification information 132 associated with the post DTa (hereinafter, also referred to as "posting identification information 132a").

The posting identification information 132a illustrated in FIG. 8 includes "identification information" in which identification information of the post DTa is set, "related identification information" in which identification information (hereinafter, also referred to as "related identification information") of image data (hereinafter, also referred to as "image A") included in the post DTa is set, and "content" in which content of the post DTa is set, as items, for instance. Note that a configuration may also be adopted in which the posting identification information 132 includes only "identification information" and "related identification information", as items.

Specifically, in the posting identification information 132a illustrated in FIG. 8, "ID11" is set as "identification information", "ID12" is set as "related identification information", and a sentence saying that "∘∘ River close to the house has flooded!" is set as "content", for instance.

Also, the information managing unit 112 manages the property information 131a and the post DTa in an associated state, by storing the property information 131a associated with the posting identification information 132a in the storage apparatus 3, in the processing in step S13, for instance.

Accordingly, when viewing the post DTa, the viewer P2 is able to also refer to the property information 131a regarding the post DTa, and is able to determine the reliability of the post DTa, for instance.

Specifically, the property information 131a illustrated in FIG. 7 indicates that the flood warning level of ∘∘ River is low, and the content thereof differs from the post DTa including a sentence saying that "∘∘ River close to the house has flooded!", for instance. Therefore, the viewer P2 is able to determine that the content of the post DTa does not match the content of the property information 131a, by referring to the property information 131a together with the post DTa, for instance. Therefore, if the viewer P2 has determined that Mr. W who is the generation agent P3 of the property information 131a is a reliable person, the viewer P2 is able to determine that it is highly possible that the post DTa is not disinformation.

Moreover, the property information 131a illustrated in FIG. 7 includes identification information of the generation agent P3. Therefore, if the viewer P2 is not able to determine whether or not Mr. W who is the generation agent P3 of the property information 131a is a reliable person, the viewer P2 is able to further refer to property information 131 (property information 131e) regarding Mr. W based on the identification information of the generation agent P3 included in the property information 131a, for instance. Therefore, in this case as well, the viewer P2 is able to determine whether or not the post DTa is disinformation by referring to the property information 131 regarding Mr. W. A specific example of graph information 133 will be described below.

### Specific Example of Graph Information

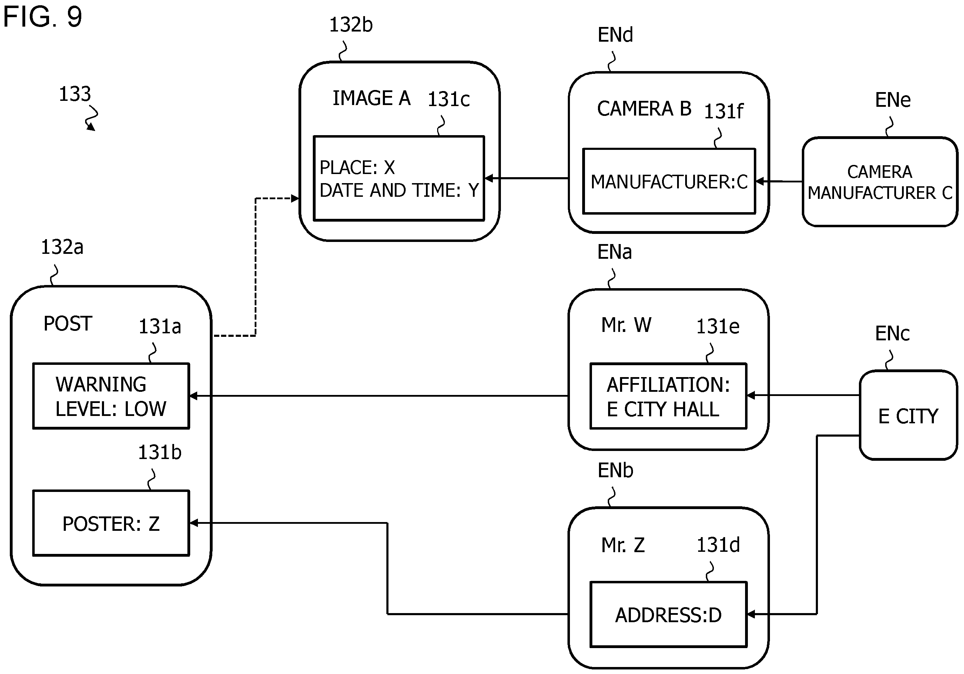

FIG. 9 is a diagram for describing a specific example of the graph information 133. The graph information 133 is information having a graph structure constituted by a plurality of pieces of property information 131 and a plurality of entities that respectively indicating generation agents P3 of the plurality of pieces of property information 131, for instance. Description will be given below assuming that the property information 131a in FIG. 9 corresponds to the property information 131a described in FIG. 7. Also, description will be given below assuming that the posting identification information 132a in FIG. 9 corresponds to the posting identification information 132a described in FIG. 8.

In the graph information 133 illustrated in FIG. 9, property information 131a and property information 131b are associated with a post DTa (posting identification information 132a), as property information 131 regarding the post DTa, for instance. Also, the property information 131a illustrated in FIG. 9 is associated with an entity ENa indicating that the generation agent P3 of the property information 131a is Mr. W, for instance. Also, the property information 131b illustrated in FIG. 9 is associated with an entity ENb indicating that the generation agent P3 of the property information 131b is Mr. Z, for instance.

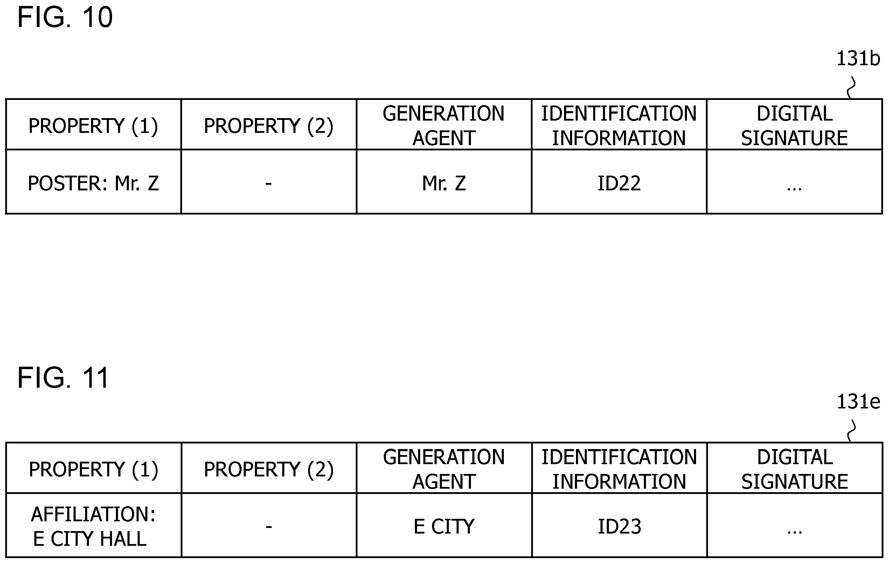

Specifically, as illustrated in FIG. 10, in the property information 131b, "poster: Mr. Z" is set as "property (1)", "-" is set as "property (2)", "Mr. Z" is set as "generation agent", and "ID22" is set as "identification information", for instance.

That is, the property information 131b illustrated in FIG. 10 is property information 131 generated by Mr. Z himself who is the poster P1 of the post DTa in order to improve the reliability of the content of the post DTa, for instance.

Also, in the graph information 133 illustrated in FIG. 9, property information 131e is associated as the property information 131 regarding the entity ENa, for instance. Also, the property information 131e illustrated in FIG. 9 is associated with an entity ENc indicating that the generation agent P3 of the property information 131e is E city, for instance.

Specifically, in the property information 131e, "affiliation: E city hall" is set as "property (1)", "-" is set as "property (2)", "E city" is set as "generation agent", and "ID23" is set as "identification information", as illustrated in FIG. 11, for instance.

That is, the property information 131e illustrated in FIG. 11 indicates that Mr. W is an agent of the E city hall, and is property information 131 generated by E city, for instance.

Also, when viewing the post DTa, if the viewer P2 of the post DTa is not able to determine whether or not Mr. W is a reliable person by also referring to the property information 131a, the viewer P2 further refers to the property information 131e based on the identification information of the generation agent P3 included in the property information 131a, for instance. If it is determined, as a result, that Mr. W is a reliable person because the fact that Mr. W is an agent of the E city hall is guaranteed by E city, the viewer P2 of the post DTa is able to determine that it is highly possible that the content of the post DTa is correct by tracing back the associated information, for instance.

Also, in the graph information 133 illustrated in FIG. 9, property information 131d is associated as the property information 131 regarding the entity ENb, for instance. Also, an entity ENc indicating that the generation agent P3 of the property information 131d is E city is associated with the property information 131d illustrated in FIG. 9, for instance.

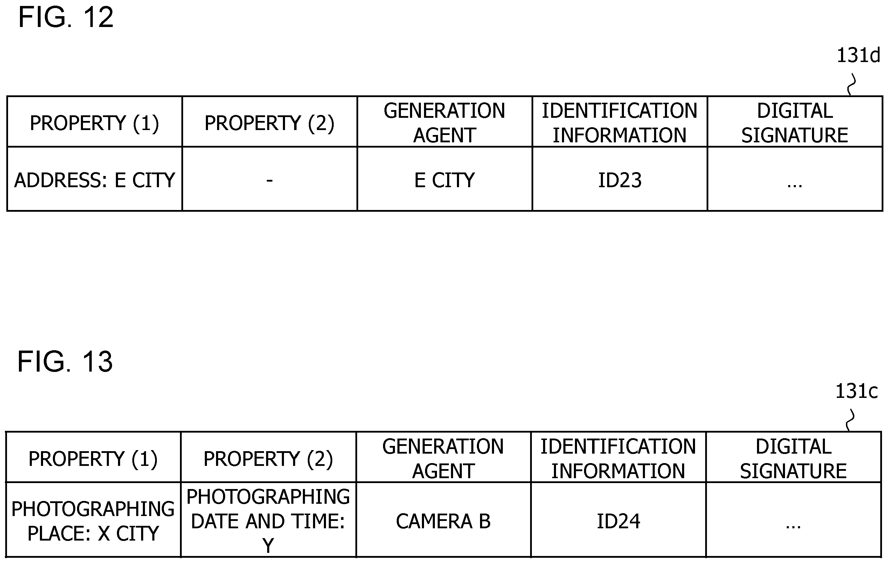

Specifically, as illustrated in FIG. 12, in the property information 131d, "address: E city" is set as "property (1)", "-" is set as "property (2)", "E city" is set as "generation agent", and "ID23" is set as "identification information".

That is, the property information 131d illustrated in FIG. 12 indicates that Mr. Z is a resident of E city, and is property information 131 generated by E city, for instance.

Also, when viewing the post DTa, if the viewer P2 of the post DTa is not able to determine whether or not Mr. Z is a reliable person by also referring to the property information 131b, the viewer P2 further refers to the property information 131d based on the identification information of the generation agent P3 included in the property information 131b, for instance. If it is determined that, as a result, Mr. Z is a reliable person, the viewer P2 of the post DTa is able to determine that it is highly possible that the content of the post DTa is correct by tracing back the associated information, for instance.

Also, in the graph information 133 illustrated in FIG. 9, property information 131c is associated as the property information 131 regarding image data (posting identification information 132b) included in the post DTa, for instance. Also, the property information 131c illustrated in FIG. 9 is associated with an entity ENd indicating that the generation agent P3 of the property information 131c is a camera B, for instance.

Specifically, as illustrated in FIG. 13, in the property information 131c, "photographing place: X City" is set as "property (1)", "photographing date and time: Y" is set as "property (2)", "camera B" is set as "generation agent", and "ID24" is set as "identification information", for instance.

That is, the property information 131c illustrated in FIG. 13 indicates that the image data included in the post DTa is image data obtained by performing photographing in X City when the date and time is Y, and is property information 131 generated by the camera B, for instance.

Also, in the graph information 133 illustrated in FIG. 9, property information 131f is associated as the property information 131 regarding the entity ENd, for instance. Also, the property information 131f illustrated in FIG. 9 is associated with an entity ENe indicating that the generation agent P3 of the property information 131f is a camera manufacturer C, for instance.

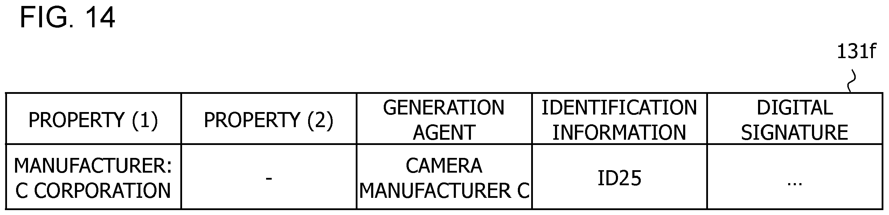

Specifically, as illustrated in FIG. 14, in the property information 131f, "manufacturer: C Corporation" is set as "property (1)", "-" is set as "property (2)", "camera manufacturer C" is set as "generation agent", and "ID25" is set as "identification information", for instance.

Also, when viewing the post DTa, if the viewer P2 of the post DTa is not able to determine whether or not the camera B is a reliable device even by referring to the property information 131c (e.g., whether or not the camera B is a device that allows falsification of photographing place of image data included in the post DTa is not able to be determined), the viewer P2 further refers to the property information 131f specified from the identification information of the generation agent P3 included in the property information 131c. If it is determined that, as a result, the camera B is a reliable device because the function of the camera B is guaranteed by the camera manufacturer C, the viewer P2 of the post DTa is able to determine that it is highly possible that the content of the post DTa is correct by tracing back the associated information, for instance.

As described above, the information processing apparatus 1 in the present embodiment accumulates pieces of property information 131 in the storage apparatus 3 in a form of graph structure with which the viewer P2 of a post DT, when confirming the reliability of the post DT, is able to trace back and refer to pieces of property information 131 related to each other, for instance.

Accordingly, the information processing apparatus 1 in the present embodiment enables confirmation of, when viewing each post DT, the reliability of the post DT by sequentially referring to pieces of property information 131 related to the post DT, for instance.

### Viewing Processing in First Embodiment

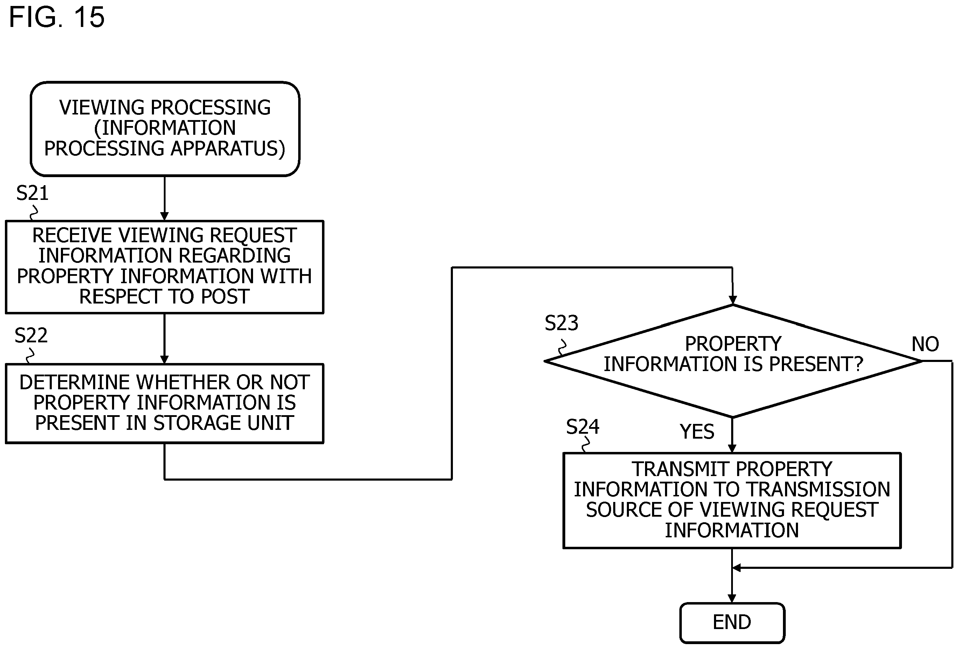

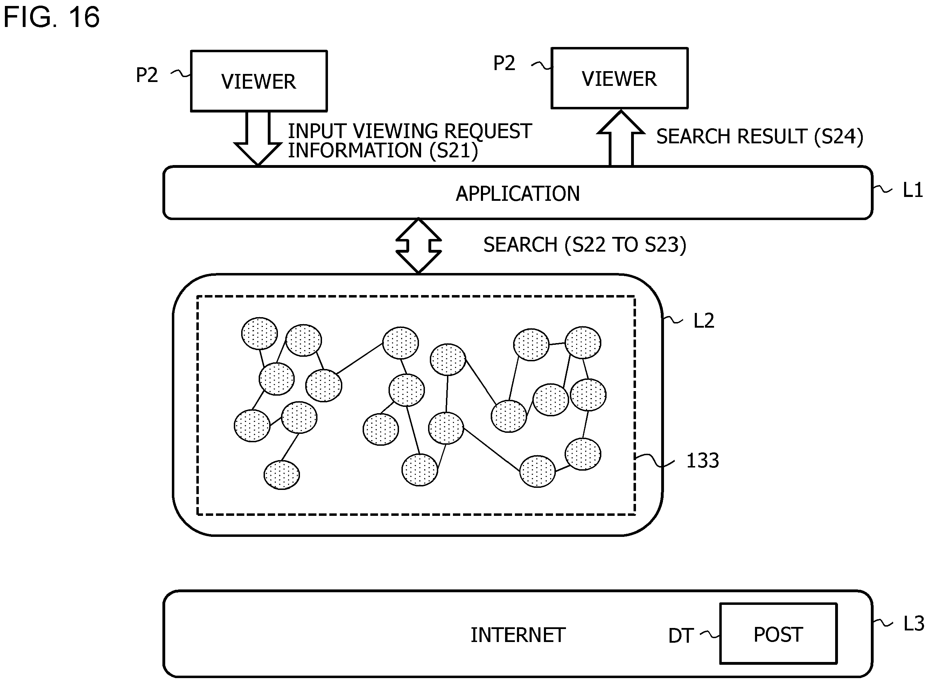

Next, viewing processing in the first embodiment will be described. FIG. 15 is a flowchart diagram for describing the viewing processing in the first embodiment. Also, FIG. 16 is a diagram for describing the viewing processing in the first embodiment.

As illustrated in FIG. 15, the viewing request receiving unit 113 receives viewing request information regarding property information 131 transmitted from an operation terminal 2 (S21), for instance.

Specifically, as illustrated in FIG. 16, when a viewer P2 of a post DT is not able to determine whether or not the content of the post DT is reliable, the viewer P2 inputs viewing request information regarding property information 131 corresponding to the post DT to the information processing apparatus 1 from the operation terminal 2.

Then, the information determining unit 114 determines whether or not the property information 131 corresponding to the viewing request information received in the processing in step S21 is stored in the storage apparatus 3 by accessing the storage apparatus 3 (S22), for instance.

Specifically, as illustrated in FIG. 16, the information determining unit 114 searches the property information 131 corresponding to posting identification information 132 included in the viewing request information, from the pieces of property information 131 that constitute the graph information 133, for instance.

If it is determined that, as a result, the property information 131 corresponding to the viewing request information received in the processing in step S21 is stored in the storage apparatus 3 (S23: YES), the information output unit 115 acquires the property information 131 corresponding to the viewing request information received in the processing in step S21 from the storage apparatus 3, and transmits the acquired property information 131 to the operation terminal 2 (operation terminal 2 that has transmitted the viewing request information) (S24), for instance.

Specifically, as illustrated in FIG. 16, the information output unit 115 transmits the property information 131 corresponding to the posting identification information 132 included in the viewing request information (result of retrieving the property information 131) to the operation terminal 2, for instance.

On the other hand, if it is determined that the property information 131 corresponding to the viewing request information received in the processing in step S21 is not stored in the storage apparatus 3 (S23: NO), the information output unit 115 will not perform the processing in step S24.

Accordingly, the operation terminal 2 is able to display the pieces of property information 131 regarding the respective posts DT together with the posts DT on the output screen, for instance. Therefore, the viewer P2 is able to also confirm the reliability of each post DT when referring to the content of the post DT, for instance.

Note that a configuration may also be adopted in which, in the processing in step S22, the information determining unit 114 searches, not only property information 131 corresponding to the posting identification information 132 included in the viewing request information, but also another property information 131 regarding the generation agent P3 of the property information 131, for instance. Also, the information output unit 115 may also be configured to, in the processing in step S24, transmit another property information 131 to the operation terminal 2 as well, for instance.

### Generation Processing in First Embodiment

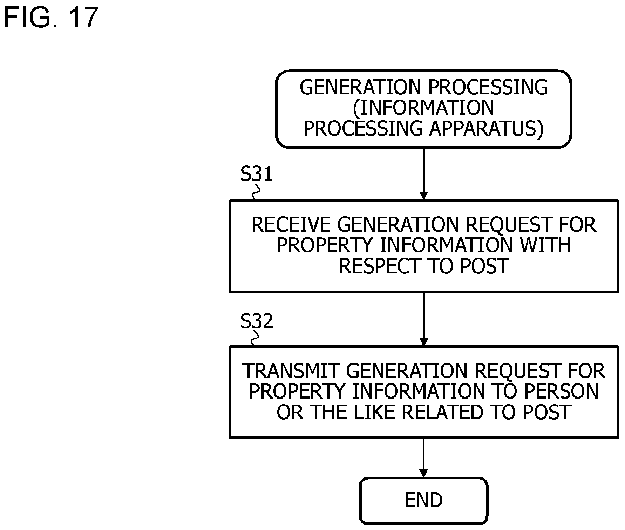

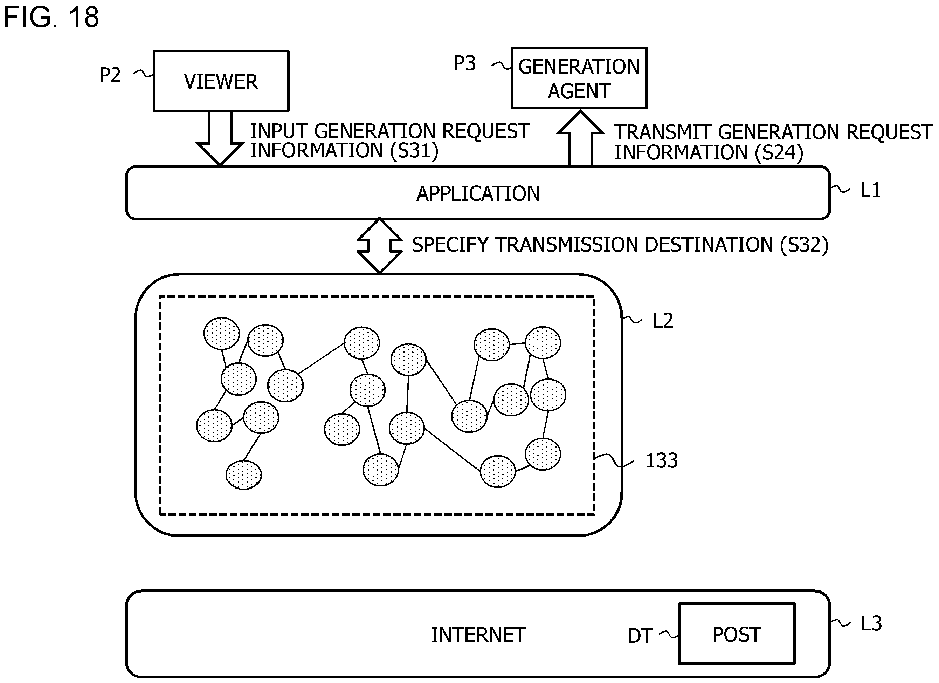

Next, generation processing in the first embodiment will be described. FIG. 17 is a flowchart diagram for describing the generation processing in the first embodiment. Also, FIG. 18 is a diagram for describing the generation processing in the first embodiment.

As illustrated in FIG. 17, the generation request receiving unit 116 receives generation request information regarding the property information 131 transmitted from an operation terminal 2 (S31), for instance.

Specifically, a viewer P2 of a post DT, when the property information 131 regarding the post DT is not present or when the viewer P2 is not able to determine the reliability of the content of the post DT even by referring to the property information 131 regarding the post DT, specifies the type (hereinafter, also referred to as a "specific type") of property information 131 needed for determining the reliability of the content of the post DT, for instance. The specific type is a type indicating the flood warning level, e.g., the property information 131a described in FIG. 9 and the like, and a type indicating the photographing place and photographing date and time of image data included in a post DT, e.g., the property information 131c described in FIG. 9 and the like, for instance. Then, as illustrated in FIG. 18, the viewer P2 inputs generation request information regarding the property information 131 corresponding to the post DT (property information 131 corresponding to the post DT, and also corresponding to the specific type) to the information processing apparatus 1 from the operation terminal 2, for instance.

Then, the generation request transmitting unit 117 transmits the generation request information received in the processing in step S31 to a generation agent P3 of the property information 131 corresponding to the generation request information received in the processing in step S31 (S32), for instance.

Specifically, the generation request transmitting unit 117 specifies, by referring to the storage apparatus 3, the generation agent P3 that is stored in advance as a generation agent P3 corresponding to the type of the property information 131 included in the generation request information, for instance. Also, as illustrated in FIG. 18, the generation request transmitting unit 117 transmits the generation request information to the specified generation agent P3 (operation terminal 2 of the generation agent P3).

Accordingly, the information processing apparatus 1 is able to prompt the generation agent P3 to generate property information 131 needed for the viewer P2 to confirm the reliability of the post DT, for instance. Also, when the property information 131 corresponding to the generation request information has been generated, the information processing apparatus 1 is able to perform processing resembling the addition processing described in FIG. 5 and the like, for instance. Therefore, even when the property information 131 regarding the post DT is not present or when the viewer P2 is not able to determine the reliability of the content of the post DT even by referring to the property information 131 regarding the post DT (property information 131 already stored in the storage apparatus 3), the viewer P2 is able to view the needed property information 131, and is able to confirm the reliability of the post DT, for instance.

As described above, the information processing apparatus 1 in the present embodiment receives property information 131 indicating the reliability of the post DT uploaded on the Internet IN and a digital signature generated from the property information 131, for instance. Also, the information processing apparatus 1 stores the property information 131 to which the posting identification information 132 of the post DT uploaded on the Internet IN and the digital signature are added in the storage apparatus 3.

That is, the information processing apparatus 1 in the present embodiment secures the authenticity and integrity of each property information 131 by causing each property information 131 to be in a state in which a digital signature generated by the generation agent P3 of the property information 131 is added, for instance.

Accordingly, when viewing a post DT uploaded on the Internet IN, the viewer P2 is able to determine the reliability of the post DT as appropriate, by referring to the property information 131 regarding the post DT, for instance.

Also, when another property information 131 corresponding to a person or thing related to a post DT uploaded on the Internet IN has been already stored in the storage apparatus 3, the information processing apparatus 1 in the present embodiment stores the property information 131 corresponding to the post DT in association with the other property information 131, for instance.

That is, when storing property information 131 regarding a post DT in the storage apparatus 3, the information processing apparatus 1 in the present embodiment stores the property information 131, in the storage apparatus 3, in a form of graph structure in which the property information 131 is associated with another property information 131 regarding the generation agent P3 of the property information 131 and another property information 131 regarding an object of the post DT, for instance.

Accordingly, even when the viewer P2 is not able to determine the reliability of a post DT from the content of property information 131 regarding the post DT, the viewer P2 is able to sequentially trace back and confirm another property information 131 related to the post DT, and is able to determine the reliability of the post DT, for instance.

Also, in the information processing apparatus 1 in the present embodiment, the graph information 133 is managed in the endorsement layer L2 different from the Internet layer L3, for instance. Therefore, the information processing apparatus 1 is able to perform information management processing without influencing uploading and viewing of posts DT on the Internet layer L3, for instance.

Note that, when generating property information 131 in the operation terminal 2, the generation agent P3 may generate encrypted data (hereinafter, also referred to as "encrypted data") from the property information 131 by using own private key (of the generation agent P3), for instance. Also, the operation terminal 2 may transmit property information 131 to which encrypted data serving as the digital signature is added to the information processing apparatus 1, for instance.

Also, when viewing property information 131 (hereinafter, also referred to as "viewing target property information 131") in an operation terminal 2, the viewer P2 may confirm the authenticity and integrity of the viewing target property information 131 by decrypting the encrypted data, which is the digital signature, using the public key of the viewing target property information 131, for instance. Specifically, in this case, the viewer P2 may specify the generation agent P3 indicated by identification information included in the viewing target property information 131, and perform decryption with respect to the viewing target property information 131, by using the public key corresponding to the specified generation agent P3, for instance.

### REFERENCE SIGNS LIST

1: INFORMATION PROCESSING APPARATUS
2: OPERATION TERMINAL
3: STORAGE APPARATUS
IN: INTERNET
101: CPU
102: MEMORY
103: COMMUNICATION DEVICE
104: STORAGE
105: BUS

## Claims

1. An information management program (110) that causes a computer (1) to execute a process comprising:
receiving property information (131) indicating a reliability of a post uploaded on the Internet and a digital signature generated from the property information (131); and
storing the property information (131), to which identification information (132) of the post and the digital signature are added, in a storage (3).

2. The information management program (110) according to claim 1, wherein the post is a sentence posted on an SNS (Social Networking Service).

3. The information management program (110) according to claim 1, wherein the storing includes, when another property information (131) corresponding to a person or thing related to the post is stored in the storage (3), storing the other property information (131) in association with the property information (131).

4. The information management program (110) according to claim 1, the process further comprising:
determining, upon receiving a viewing request for first property information (131) corresponding to a first post uploaded on the Internet, whether or not the first property information (131) corresponding to the first post is present by referring to the storage (3); and
transmitting, when the first property information (131) is present, the first property information (131) to a transmission source of the viewing request.

5. The information management program (110) according to claim 1, the process further comprising:
transmitting, upon receiving a generation request for second property information (131) corresponding to a second post uploaded on the Internet, the generation request for the second property information (131) to a transmission destination corresponding to a person or thing related to the second post; and
storing, upon receiving the second property information (131) and a digital signature generated from the second property information (131), the second property information (131), to which identification information (132) of the second post and the digital signature generated from the second property information (131) are added, in the storage (3).

6. An information processing apparatus (1) comprising:
a memory (102); and
a processor (101) coupled to the memory (102) and the processor (101) configured to:
receive property information (131) indicating a reliability of a post uploaded on the Internet and a digital signature generated from the property information (131), and
store the property information (131) to which identification information (132) of the post and the digital signature are added.

7. The information processing apparatus (1) according to claim 6, wherein when another property information (131) corresponding to a person or thing related to the post is stored in the storage (3), the processor (101) stores the other property information (131) in association with the property information (131).

8. An information processing system (10) comprising:
an information processing apparatus (1); and
an operation terminal (2) that is able to access the information processing apparatus (1),
wherein the information processing apparatus (1) includes:
a memory (102), and
a processor (101) coupled to the memory (102) and the processor (101) configured to:
receive property information (131) indicating a reliability of a post uploaded on the Internet and a digital signature generated from the property information (131), and
store the property information (131) to which identification information (132) of the post and the digital signature are added.

9. The information processing system (10) according to claim 8, wherein when another property information (131) corresponding to a person or thing related to the post is stored in the storage (3), the processor (101) stores the other property information (131) in association with the property information (131).

10. An information management method that causes a computer (1) to execute a process comprising:
receiving, by a processor (101), property information (131) indicating a reliability of a post uploaded on the Internet and a digital signature generated from the property information (131); and
storing, by the processor (101), the property information (131), to which identification information (132) of the post and the digital signature are added, in a storage (3).

11. The information management method according to claim 10, wherein the storing includes, when another property information (131) corresponding to a person or thing related to the post is stored in the storage (3), storing the other property information (131) in association with the property information (131).
